**Europäisches Patentamt**

**European Patent Office**

**Office européen des brevets**

(11) Veröffentlichungsnummer: **0 255 632**
**A1**

## (12) EUROPÄISCHE PATENTANMELDUNG

(21) Anmeldenummer: 87110337.0

(22) Anmeldetag: 17.07.87

(51) Int. Cl.⁴ **C08K 3/06** , C08L 23/16 , C08L 21/00

(30) Priorität: 02.08.86 DE 3626240

(43) Veröffentlichungstag der Anmeldung:
**10.02.88 Patentblatt 88/06**

(84) Benannte Vertragsstaaten:
**AT BE CH DE ES FR GB GR IT LI NL SE**

(71) Anmelder: **BAYER AG**
**Konzernverwaltung RP Patentabteilung**
**D-5090 Leverkusen 1 Bayerwerk(DE)**

(72) Erfinder: **Peter, Julius, Dr.**
**Tiergartenstrasse 107**
**D-3000 Hannover 71(DE)**
Erfinder: **Pampus, Gottfried, Dr.**
**Hermann-Löns-Strasse 2**
**D-3014 Laatzen 3(DE)**

(54) Steife, dämpfungsarme Gummimischung.

(57) Um eine leicht zu verarbeitende Kautschukmischung zu erhalten, die nach der Vulkanisation einen steifen und dämpfungsarmen Gummi ergibt, werden zwei Kautschuktypen A und B zu mischen, wobei der Kautschuk A gar nicht oder nur sehr langsam mit Schwefel reagiert und der Kautschuk B mit Schwefel ein Duromere nach Art eines Hartgummis bildet, und dieser Mischung soviel Schwefel zuzusetzen, wie zur Bildung von Hartgummi aus dem Kautschuk B erforderlich. Dabei kann vorzugsweise der Kautschuk B mit dem Schwefel und gegebenenfalls verstärkenden Füllstoffen (z.B. Ruß oder Kieselsäure) vermischt und erst dananch mit dem Kautschuk vereinigt und homogenisiert werden.

EP 0 255 632 A1

## Steife, dämpfungsarme Gummimischung

An periodisch verformten Bauteilen ist die Dämpfungsarmut des Werkstoffes eine unabdingbare Voraussetzung für geringen Energie-Verbrauch. Bei manchen solcher Bauteile, beispielsweise bei Gürtellagen von rollwiderstansoptimierten Reifen, wird zudem eine hohe Steifigkeit angestrebt.

Zur Steifigkeitserhöhung können dem Kautschuk bekanntermaßen hochaktive Füllstoffe auf Ruß-oder Kiesesäurebasis beigemischt werden. Unerwünschterweise erhöht sich damit aber auch, bezogen auf einen bestimmten Verformungsgrad, die Dämpfung der Mischung, also der Flächeninhalt im Spannungs-Dehnungs-Diagramm zwischen Be-und Entlastunskurve (Hysteresis). Überdies ist die Aufnahmefähigkeit plastischer Kautschuke für die erwähnten Füllstoffe ohnehin begrenzt.

Es stellt sich die Aufgabe, eine leicht zu verarbeitende Kautschukmischung anzugeben, die nach der Vulkanisation einen steifen und dämpfungsarmen Gummi ergibt.

Gegenstand der Erfindung ist eine Kautschukmischung aus zwei Kautschuktypen A und B wobei der Kautschuk A gar nicht oder nur sehr langsam mit Schwefel reagiert und der Kautschuk B mit Schwefel ein Duromeren nach Art eines Hartgummis bildet der soviel Schwefel zugesetzt ist, wie es zur Bildung von Hartgummi aus dem Kautschuk B erfroderlich ist.

Als Kautschuk vom Typ A werden die Polymerisate und Copolymerisate von Olefinen, wie z.B. von Ethylen, Propylen, 1-Buten oder Iso-Buten, oder von anderen halogenierten oder sulfo-halogenierten Derivaten sowie Terpolymeren mit Dienen wie Dicyclopentadien, Ethylendiennorbornen, 1,4-Hexadien oder anderen Diolefinen bevorzugt.

Als zur Hartgummibildung befähigte Kautschuke von Typ B eignen sich insbesondere die Polymerisate des Isoprens, Butadiens oder Dimethyl-Butadiens, wobei diese mit den üblichen Copolymerisations-Komponenten, wie Styrol, Acrylnitril oder Methacrylsäureestern, copolymerisiert sein können. Im allgemeinen verwendet man 10-90 Gew.% des Kauschuks A und 90-10 Gew.-% des Kautschuks B, bevorzugt 60-85 Gew.-% A und 15-40 Gew.-% B. Die beiden Kautschuke können in üblicher Weise z.B. auf der Walze oder im Innenkneter gemischt werden. Sie enthalten - bezogen auf Gesamtkautschuk - 4-10 Gew.-% Schwefel, der beim Vereinigen der Kautschuke eingearbeitet werden kann. Vorzugsweise wird erst Kautschuk B mit dem Schwefel vereinigt und dann Kautschuk A zugesetzt. Daneben sind bevorzugt übliche Vulkanisationshilfsmittel wie Benzothiazol-2-cyclohexylsulfenamid und Tetramethylthiuramdisulfid von Vorteil. Die Mischungen enthalten auch Füllstoffe wie Ruß und Kieselsäure in Mengen bis zu 25 Gew.-% bezogen auf Kautschuk.

Die Mischungen können in üblicher Weise (z.B. durch Extrusion) verformt und dann durch Hitzeeinwirkung (z.B. 160°C, 30 Minuten) vulkanisiert werden. Sie sind vor der Vulkanisation leicht verarbeitbar und ergeben besonders steife Vulkanisate.

Die Erfindung wird anschließend anhand eines beispielhaften Mischungsrezeptes erläutert, in dem zusätzlich ein verstärkender Füllstoff, nämlich Ruß, eingesetzt ist:

| Kautschuk A: | Gew.-% |
|---|---|
| Ethylen-Propylen-Norbornen-Ter-polymerisat (Ethylen-Propylen 1:1, 5 % Ethylen-Norbornen) | 80 |
| Kautschuk B: | |
| Butadien-Styrolcopolymerisat (23 % Styrol) | 20 |

Zusätze Gew.-% bezogen auf Gesamtkautschuk

| | |
|---|---|
| Aktivruß | 15 |
| Zinkweiß | 5 |
| Schwefel | 9,5 |
| Benzothiazyl-2-Cyclohexylsulfenamid | 1,5 |
| Tetramethylthiuramdisulfid | 0,4 |
| | 131,4 |

Nach 20-minütiger Vulkanisation bei 160°C ergeben sich bei Raumtemperatur folgende Werkstoffkennwerte:

Zerreißfestigkeit (N/mm²)l 19,6
Dehnung (%) 366
Spannungswert bei 200 % (N/mm²) 9,4
Härte (Shore) 77
Elastizität 46

Es wird zunächst der Kautschuk B (hier: Butadien-Styrolcopolymerisat) mit der angegebenen Menge Schwefel und dem verstärkenden Füllstoff (Hier: Ruß; Kieselsäure aber auch möglich) vermischt und erst danach mit dem Kautschuk A zusammen homogenisiert.

## Ansprüche

1. Kautschukmischung für steifen und dämpfungsarmen Gummi zwei Kautschuktypen A und B, wobei der Kautschuk A gar nicht oder nur sehr langsam mit Schwefel reagiert und der Kautschuk B mit Schwefel Duromere nach Art eines Hartgummis bildet enthaltend soviel Schwefel, wie zur Bildund von Hartgummi aus dem Kautschuk B notwendig ist.

2. Kautschukmischung nach Anspruch 1 worin der Kautschuk A ein Polymerisat oder Copolymerisat von Olefinen, wie Ethylen, Propylen, 1-Buten oder Iso-Buten oder von deren halogenierten oder sulfohalogenierten Derivaten oder Terpolymeren mit Dienen wie Dicyclopentadien, Ethyldiennorbornen, 1,4-Hexadien oder anderen Diolefinen ist.

3. Kautschukmischung nach Anspruch 1, der Kautschuk B ein Polymerisat des Isoprens, Butadiens oder Dimethylbutadiens ist, übliche Comonomere copolymerisiert enthalten kann.

4. Verfahren zur Herstellung einer Kautschukmischung nach Anspruch 1, dadurch gekennzeichnet, daß zunächst der Kautschuk B mit Schwefel und gegebenenfalls verstärkenden Füllstoffen vermischt und erst danach mit dem Kautschuk A zusammen homogenisiert wird.

3

## Europäisches Patentamt

# EUROPÄISCHER RECHERCHENBERICHT

Nummer der Anmeldung

EP 87 11 0337

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 10, Nr. 136 (C-347)[2193], 20. Mai 1986; & JP-A-60 262 842 (SUMITOMO KAGAKU KOGYO K.K.) 26-12-1985 * Zusammenfassung * | 1-4 | C 08 K 3/06 C 08 L 23/16 C 08 L 21/00 |
| | --- | | |
| X | DATABASE WPIL, Nr. 86-209583, Derwent Publications Ltd, London, GB; & JP-A-61 143 458 (SUMITOMO CHEM. IND. K.K.) 01-07-1986 * Zusammenfassung * | 1-3 | |
| | --- | | |
| X | EP-A-0 188 097 (SUMITOMO) * Anspruch 1 * | 1-3 | |
| | ----- | | |

### RECHERCHIERTE SACHGEBIETE (Int. Cl.4)

C 08 K
C 08 L

Der vorliegende Recherchenbericht wurde für alle Patentansprüche erstellt.

| Recherchenort | Abschlußdatum der Recherche | Prüfer |
|---|---|---|
| DEN HAAG | 12-11-1987 | VAN HUMBEECK F.W.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA form 1503 03 82